# EUROPÄISCHE PATENTSCHRIFT

(11) **EP 1 526 016 B1**
(45) Veröffentlichungstag und Bekanntmachung des Hinweises auf die Patenterteilung: **12.09.2007**
(21) Anmeldenummer: 04021698.8
(22) Anmeldetag: 13.09.2004
(51) Int. Cl.: B60H 1/00

(54) **Klimatisierungsvorrichtung, insbesondere für ein Kraftfahrzeug**
Air conditioner, in particular for a vehicle
Climatisation, en particulier pour un véhicule

(30) Priorität: 21.10.2003 DE 10349431
(43) Veröffentlichungstag der Anmeldung: 27.04.2005
(73) Patentinhaber: Behr GmbH & Co. KG, 70469 Stuttgart (DE)
(72) Erfinder: Klingler, Dietrich, Dipl.-Ing., 73540 Heubach (DE); Schmadl, Dieter, Dipl.-Ing., 71672 Marbach (DE); Schwahn, Werner, Dipl.-Ing., 71701 Schwieberdingen (DE)
(74) Vertreter: Grauel, Andreas

(56) Entgegenhaltungen:
- EP-A- 0 818 337
- EP-A- 0 904 964
- EP-A- 1 013 489
- EP-A- 1 426 213

## Beschreibung

Die vorliegende Erfindung betrifft ein Klimatisierungsvorrichtung zur Klimatisierung eines Raumes, insbesondere eines Kraftfahrzeuginnenraumes mit den Merkmalen des Oberbegriffs des Patentanspruchs 1.

Eine Fahrzeugklimaanlage umfasst üblicherweise ein Gebläse, eine Kühleinrichtung sowie eine dieser nachgeordnete Heizeinrichtung. Ausströmöffnungen für gekühlte bzw. erwärmte Luft befinden sich an verschiedenen Stellen des Fahrzeuginnenraumes. Die Klimaanlage befindet sich meist im vorderen Bereich einer Fahrgastzelle, hinter einer Armaturentafel und vor einer Stirnwand, die eine Trennwand zwischen einem Motorraum und der Fahrgastzelle bildet. Dieser Einbauort weist aufgrund des für die Fahrzeuginsassen notwendigen Bewegungsraums nur begrenzten Platz auf, so dass die Anlagen für Austausch- und Wartungsarbeiten sehr schwer zugänglich sind. Bei manchen Fahrzeugen werden aus diesem Grund einzelne Komponenten der Klimaanlage in einen Bodenbereich eingebaut, wo sie jedoch ebenfalls sehr schwer zugänglich sind.

Aus der EP 1 266 777 A1 ist eine Fahrzeugklimaanlage sowie ein Luftverteilermodul bekannt, bei dem ein Gehäuse eine Durchführung für eine Lenksäule des Fahrzeugs aufweist. Die Anordnung der übrigen Komponenten wie Gebläse, Kühl- und Heizeinrichtung sowie der Luftverteilungskanäle ist so abgestimmt, dass die Lenksäule ohne Funktionsbeeinträchtigung durch das Gehäuse und an den Komponenten vorbei geführt werden kann.

Aus der EP 0 904 964, das als nächstliegender Stand der Technik gesehen wird, ist eine Klimatisierungsvorrichtung für ein Kraftfahrzeug offenbart, wobei sämtliche Komponenten der Klimaanlage in einer Stirnwand angeordnet sind.

Der vorliegenden Erfindung liegt die Aufgabe zugrunde, eine Klimaanlage zur Innenraumtemperierung beziehungsweise -klimatisierung zur Verfügung zu stellen, die sich durch einen einfachen und kompakten Aufbau sowie durch eine gute Zugänglichkeit für Wartungs- und/oder Austauscharbeiten auszeichnet.

Diese Aufgabe wird durch die im Anspruch 1 angegebenen Merkmale gelöst. Vorteilhafte Ausgestaltungen und Weiterbildungen der Erfindung ergeben sich aus den abhängigen Ansprüchen.

Die erfindungsgemäße Klimatisierungseinrichtung mit den Merkmalen des Patentanspruchs 1 sieht vor, dass zumindest Teile der Luftführungskanäle als integrierte Bestandteile einer Stirnwand zwischen einer Antriebsmaschine und Fahrzeuginnenraum ausgebildet sind. Die Stirnwand kann insbesondere Stützrohre aufweisen, die als Luftführungskanäle ausgebildet sind. Diese Stützrohre verlaufen typischer Weise in horizontaler Richtung zwischen den beiden Längsseiten des Fahrzeugs. Eine solche Klimatisierungsvorrichtung ermöglicht einen besonders Platz sparenden Einbau, da sie sehr kompakt ausgebildet sein kann. Die Stirnwand kann insbesondere eine muldenartige oder in geeigneter Weise profilierte Aufnahme zur Montage der modular aufgebauten Klimatisierungsvorrichtung aufweisen. Auf diese Weise kann die Klimaanlage optimal und sehr platzsparend in die Stirnwand integriert werden. Zudem kann damit eine verbesserte Wartungsmöglichkeit aufgrund einer verbesserten Zugänglichkeit der Klimaanlage ermöglicht werden.

Vorzugsweise weist ein Wärmetauscher der Klimatisierungsvorrichtung eine längliche Kontur auf, deren Längserstreckungsrichtung parallel zur Oberfläche der Stirnwand und damit quer zur Fahrzeuglängsachse verläuft. Die Heizeinrichtung kann oberhalb des Wärmetauschers angeordnet sein. Der Wärmetauscher kann insbesondere stirnseitige Lufteintrittsöffnungen und radiale Luftaustrittsöffnungen aufweisen. Aufgrund der schmalen und länglichen Gestaltung kann es ermöglicht werden, die gesamte Klimaanlage seitlich aus ihrem Einbauort heraus zu ziehen, sollte dies aufgrund eines Defektes notwendig sein.

Die Erfindung wird nachfolgend in bevorzugten Ausführungsbeispielen anhand der zugehörigen Zeichnungen näher erläutert. Dabei zeigen:
- Figur 1: eine schematische Darstellung einer ersten Variante einer erfindungsgemäßen Klimatisierungsvorrichtung,
- Figur 2: eine schematische Darstellung einer weiteren Variante der Klimatisierungsvorrichtung,
- Figur 3: eine Draufsicht auf die Klimatisierungsvorrichtung,
- Figur 4 und 5: perspektivische Darstellungen der Klimatisierungsvorrichtung,
- Figur 6: eine perspektivische Darstellung einer Stirnwand und
- Figur 7: eine perspektivische Darstellung einer an der Stirnwand montieren Klimatisierungsvorrichtung.

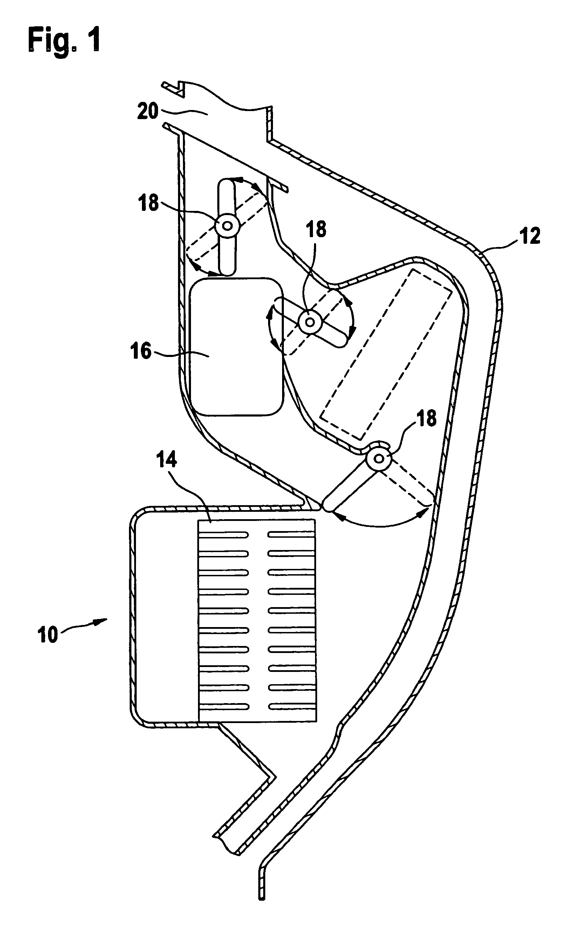

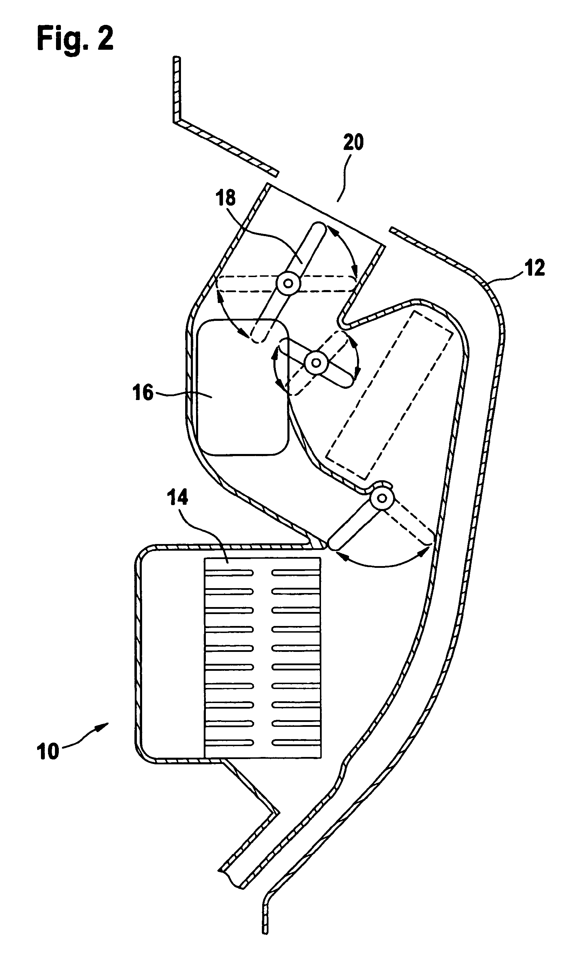

Die Figuren 1 und 2 zeigen jeweils in schematische Schnittdarstellungen den Einbau einer Klimatisierungsvorrichtung 10 im Bereich einer Stirnwand 12, die zwischen Motorraum und Fahrzeuginnenraum eines Kraftfahrzeugs angeordnet ist. Die Klimatisierungsvorrichtung 10 umfasst einen Verdampfer 14 bzw. Wärmetauscher zum Kühlen von angesaugter Umgebungsluft sowie einen oberhalb dieses Verdampfers 14 angeordneten Heizkörper 16. Beide werden nacheinander von der zu klimatisierenden Luft durchströmt. Mehrere schwenkbare Klappen 18 ermöglichen eine Temperaturregelung sowie eine Luftzufuhr in gewünschte Richtung. Von einer Reihe von Luftaustrittsöffnungen 20, die in den Fahrzeuginnenraum münden, zeigt die Figur 1 lediglich eine nach oben gerichtete, durch welche die Luft in Richtung zu einer Windschutzscheibe gefördert werden kann. Figur 2 verdeutlicht eine modifizierte Ausgestaltung der Klimatisierungsvorrichtung 10, bei der die Luftaustrittsöffnungen 20 in einem anderen Winkel im oberen Bereich der Stirnwand 12 angeordnet sind.

In beiden Darstellungen wird deutlich, dass die Kontur der Klimatisierungsvorrichtung 10 der Kontur der Stirnwand 12 derart angepasst ist, dass sich eine seitliche Verschiebbarkeit und vorzugsweise vom Motorraum eine Entnehmbarkeit der gesamten Klimaanlage ergibt.

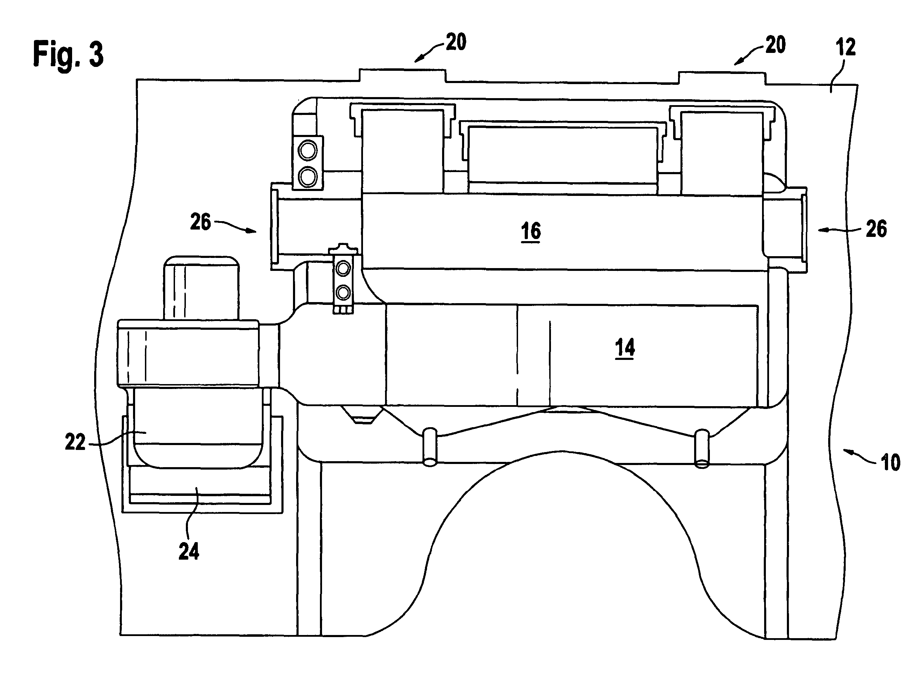

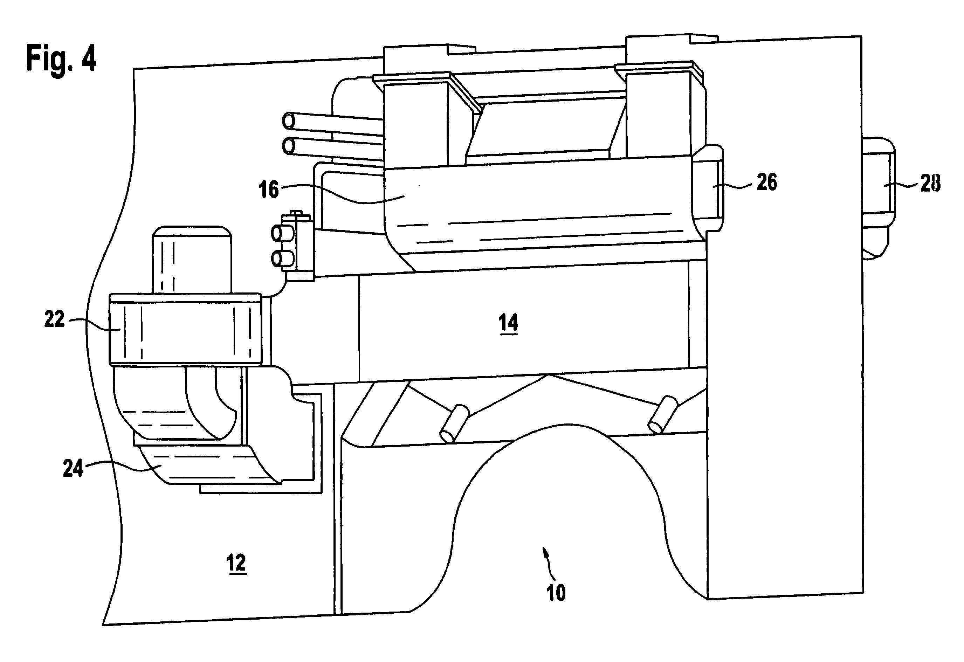

Die Figuren 3 und 4 verdeutlichen eine Ansicht von vorne auf die Klimatisierungsvorrichtung 10 im an der Stirnwand 12 montierten Zustand. Deutlich erkennbar ist hierbei die schmale längliche Bauweise des Wärmetauschers 14 sowie des darüber angebrachten Heizkörpers 16. Ein Gebläse 22 ist seitlich am Verdampfer 14 angeordnet und fördert Luft, die es aus einer Ansaugöffnung 24 ansaugt, in den Verdampfer 14. Erkennbar sind weiterhin die oberen Ausströmöffnungen 20 sowie seitlich mündende Luftanschlüsse 26, die zu seitlichen Luftführungskanälen 28 münden. Diese führen zu Ausströmöffnungen im Fahrzeuginnenraum im Armaturen- bzw. im Bodenbereich.

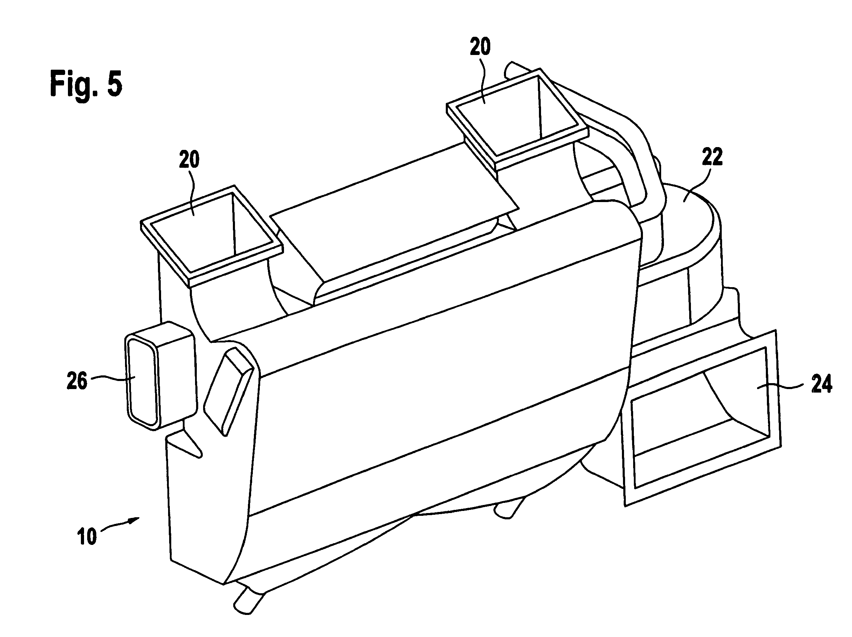

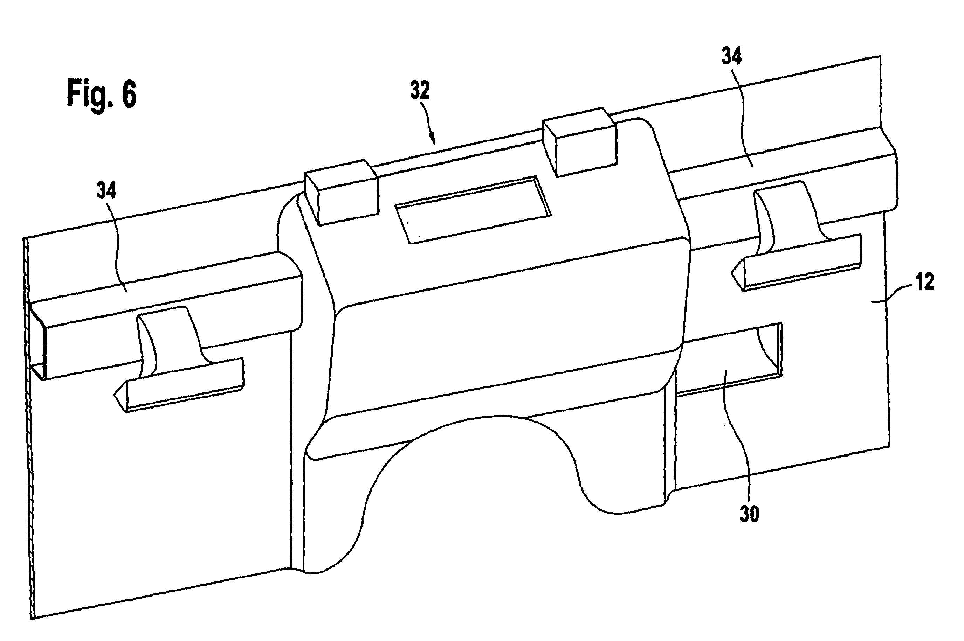

Figur 5 zeigt eine schematische Prinzipdarstellung der Klimatisierungsvorrichtung 10 im nicht montierten Zustand. Die Blickrichtung ist hierbei entgegen gesetzt zu der von Figur 4. Erkennbar ist hier insbesondere der sehr kompakte Aufbau, der sich zur modularen Montage der fertig vorbereiteten Einheit in die davor vorgesehene Stirnwand eignet. Die Ansaugöffnung 24 für das Gebläse kann die Luft durch eine entsprechende Aussparung 30 in der Stirnwand 12 fördern, wie sie anhand der Figur 6 verdeutlicht ist.

Figur 6 verdeutlicht die Stirnwand 12, die eine muldenförmige Aufnahme 32 zur Montage der Klimatisierungsvorrichtung 10 aufweist. Insbesondere sind hierbei Luftführungskanäle 34 erkennbar, die integraler Bestandteil der Stirnwand 12 sind und aus denen Luftaustrittsöffnungen zum Fahrzeuginnenraum hin münden. Bei einer Stirnwand 12 aus Stahl- oder Aluminiumblech bestehen die Luftführungskanäle 34 aus gleichem Material. Sie bewirken somit gleichzeitig eine Versteifung der Stirnwand 12, so dass sie als weitere Funktionsteile fungieren können. Im vorliegenden Fall sind die Luftführungskanäle 34 als horizontal verlaufende Stützrohre ausgebildet, welche zu einer Versteifung und Stabilisierung der gesamten Fahrzeugkarosserie führen.

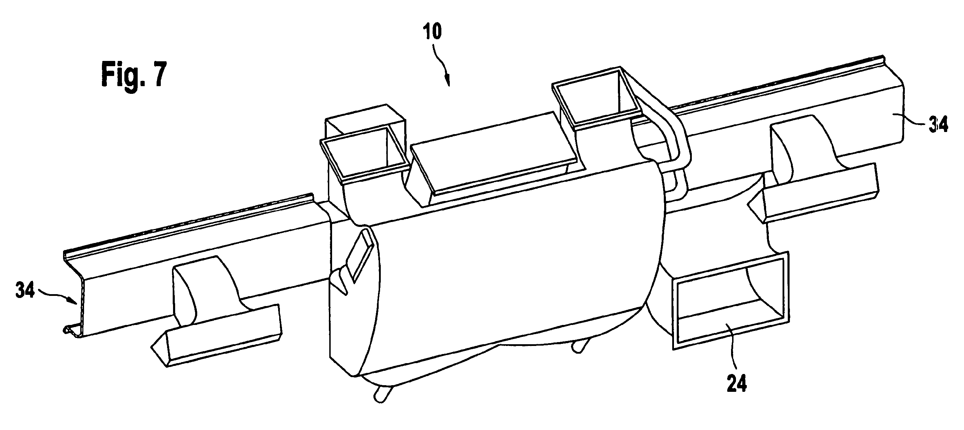

Die Figur 7 zeigt nochmals die Klimatisierungsvorrichtung 10 im montierten Zustand, jedoch ohne die Stirnwand 12, von der lediglich die Luftführungskanäle 34 dargestellt sind. Auf diese Weise wird der räumliche Zusammenhang der montierten Klimaanlage besser verdeutlicht.

## Patentansprüche

1. Klimatisierungsvorrichtung für ein Kraftfahrzeug, umfassend wenigstens einen Wärmetauscher (14), sowie wenigstens eine Heizeinrichtung (16), die in einem Gehäuse angeordnet sind, wobei im eingebauten Zustand die Klimatisierungsvorrichtung im Bereich einer Stirnwand (12) zwischen einer Antriebsmaschine und einem Fahrzeuginnenraum angeordnet ist und Luftführungskanäle (34) zumindest Teilweise als integrierter Bestandteil der Stirnwand (12) ausgebildet sind **dadurch gekennzeichnet, dass** die Klimatisierungsvorrichtung der Kontur der Stirnwand 12 derart angepasst ist, dass sich eine seitliche Verschiebbarkeit und Entnehmbarkeit der gesamten Klimatisierungsvorrichtung vom Motorraum aus ergibt.

2. Klimatisierungsvorrichtung nach Anspruch 1, **dadurch gekennzeichnet, dass** die Stirnwand (12) Stützrohre aufweist, die als Luftführungskanäle (34) ausgebildet sind.

3. Klimatisierungsvorrichtung nach Anspruch 1 oder 2, **dadurch gekennzeichnet, dass** die Stirnwand (12) eine Aufnahme (32) zur Montage der modular aufgebauten Klimatisierungsvorrichtung (10) aufweist.

4. Klimatisierungsvorrichtung nach einem der Ansprüche 1 bis 3, **dadurch gekennzeichnet, dass** die Stirnwand (12) aus Stahlblech, aus Aluminiumblech oder aus einem Verbundwerkstoff gefertigt ist.

5. Klimatisierungsvorrichtung nach einem der voranstehenden Ansprüche, **dadurch gekennzeichnet, dass** der Wärmetauscher (14) eine längliche Kontur aufweist, deren Längserstreckungsrichtung parallel zur Oberfläche der Stirnwand (12) verläuft.

6. Klimatisierungsvorrichtung nach einem der voranstehenden Ansprüche, **dadurch gekennzeichnet, dass** die Heizeinrichtung (16) oberhalb des Wärmetauschers (14) angeordnet ist.

7. Klimatisierungsvorrichtung nach einem der voranstehenden Ansprüche, **dadurch gekennzeichnet, dass** der Wärmetauscher (14) stirnseitige Lufteintrittsöffnungen und radiale Luftaustrittsöffnungen aufweist.

8. Klimatisierungsvorrichtung nach einem der voranstehenden Ansprüche, **dadurch gekennzeichnet, dass** der Wärmetauscher (14) unterhalb einer Luftverteilvorrichtung angeordnet ist.

9. Klimatisierungsvorrichtung nach einem der voranstehenden Ansprüche, **dadurch gekennzeichnet, dass** die Klimatisierungsvorrichtung (10) über einen Motorraum montierbar ist.

10. Klimatisierungsvorrichtung nach einem der Ansprüche 3 bis 9, **dadurch gekennzeichnet, dass** die Aufnahme (32) als motorseitige Ausbuchtung in der Stirnwand (12) ausgeführt ist.

11. Klimatisierungsvorrichtung nach Anspruch 10, **dadurch gekennzeichnet, dass** die Ausbuchtung (32) so gestaltet ist, dass jeweils zu den Luftführungskanälen (34) hin seitliche Anschlüsse möglich sind.

## Claims

1. Air-conditioner for a motor vehicle, comprising at least one heat exchanger (14) and at least one heater (16) arranged in a housing, such that in its fitted condition the air-conditioned is arranged in the area of a bulkhead (12) between a drive engine and an inside space of the vehicle and air ducts (34) are at least in part formed as an integral portion of the said bulkhead (12), **characterised in that** the air-conditioned matches the contour of the bulkhead (12) in such manner that it is possible to move the entire air-conditioned sideways and remove it from the engine compartment.

2. Air-conditioner according to Claim 1, **characterised in that** the bulkhead (12) comprises support tubes which are made as air ducts (34).

3. Air-conditioner according to Claims 1 or 2, **characterised in that** the bulkhead (12) has a holding space (32) for mounting the air-conditioner (10), which is of modular construction.

4. Air-conditioner according to any of Claims 1 to 3, **characterised in that** the bulkhead (12) is made of steel sheet, aluminium sheet or a composite material.

5. Air-conditioner according to any of the preceding claims, **characterised in that** the heat exchanger (14) has an elongated contour whose longitudinal direction extends parallel to the surface of the bulkhead (12).

6. Air-conditioner according to any of the preceding claims, **characterised in that** the heater (16) is arranged above the heat exchanger (14).

7. Air-conditioner according to any of the preceding claims, **characterised in that** the heat exchanger (14) has air inlet openings at its end and radial air outlet openings.

8. Air-conditioner according to any of the preceding claims, **characterised in that** the heat exchanger (14) is arranged under an air distribution device.

9. Air-conditioner according to any of the preceding claims, **characterised in that** the air-conditioner (10) can be mounted over an engine space.

10. Air-conditioner according to any of Claims 3 to 9, **characterised in that** the holding space (32) is made as a bulge in the bulkhead (12) on the engine side.

11. Air-conditioner according to Claim 10, **characterised in that** the holding space (32) is designed such that lateral connections can be made to each of the air ducts (34).

## Revendications

1. Dispositif de climatisation pour un véhicule automobile, comprenant au moins un échangeur de chaleur (14), ainsi qu'au moins un dispositif de chauffage (16), qui sont disposés dans un carter, où, à l'état monté, le dispositif de climatisation est disposé, dans la zone d'une paroi frontale (12), entre un moteur d'entraînement et un habitacle du véhicule, et des conduits de passage d'air (34) sont configurés, au moins partiellement, comme un composant intégré de la paroi frontale (12),
**caractérisé en ce que** le dispositif de climatisation est adapté au contour de la paroi (12), de manière telle qu'il en résulte une mobilité et une possibilité de dépose, latérales, de tout le dispositif de climatisation, par rapport au compartiment moteur.

2. Dispositif de climatisation selon la revendication 1, **caractérisé en ce que** la paroi frontale (12) présente des tubes supports qui sont configurés comme des conduits de passage d'air (34).

3. Dispositif de climatisation selon la revendication 1 ou 2, **caractérisé en ce que** la paroi frontale (12) présente un logement (32) servant au montage du dispositif de climatisation (10) à structure modulaire.

4. Dispositif de climatisation selon l'une quelconque des revendications 1 à 3, **caractérisé en ce que** la paroi frontale (12) est réalisée dans une tôle d'acier, une tôle d'aluminium ou bien dans un matériau composite.

5. Dispositif de climatisation selon l'une quelconque des revendications précédentes, **caractérisé en ce que** l'échangeur de chaleur (14) présente un contour allongé dont la direction d'étendue longitudinale s'étend parallèlement à la surface de la paroi frontale (12).

6. Dispositif de climatisation selon l'une quelconque des revendications précédentes, **caractérisé en ce que** le dispositif de chauffage (16) est disposé au-dessus de l'échangeur de chaleur (14).

7. Dispositif de climatisation selon l'une quelconque des revendications précédentes, **caractérisé en ce que** l'échangeur de chaleur (14) présente des ouvertures frontales d'entrée d'air et des ouvertures radiales de sortie d'air.

8. Dispositif de climatisation selon l'une quelconque des revendications précédentes, **caractérisé en ce que** l'échangeur de chaleur (14) est disposé au-dessous d'un dispositif répartiteur d'air.

9. Dispositif de climatisation selon l'une quelconque des revendications précédentes, **caractérisé en ce que** le dispositif de climatisation (10) peut être monté en passant par un compartiment moteur.

10. Dispositif de climatisation selon l'une quelconque des revendications 3 à 9, **caractérisé en ce que** le logement (32) est configuré comme une partie bombée, côté moteur, dans la paroi frontale (12).

11. Dispositif de climatisation selon la revendication 10, **caractérisé en ce que** la partie bombée (32) est configurée de manière telle, que des raccords latéraux soient possibles, respectivement, vers les conduits de passage d'air (34).
